# EUROPÄISCHE PATENTSCHRIFT

(11) **EP 1 673 525 B1**
(45) Veröffentlichungstag und Bekanntmachung des Hinweises auf die Patenterteilung: **08.09.2010**
(21) Anmeldenummer: 04740250.8
(22) Anmeldetag: 24.06.2004
(51) Int. Cl.: F02B 37/22, F02B 37/24

(54) **VERDICHTER IM ANSAUGTRAKT EINER BRENNKRAFTMASCHINE**
COMPRESSOR IN THE INDUCTION TRACT OF AN INTERNAL COMBUSTION ENGINE
COMPRESSEUR MONTE DANS LE SYSTEME D'ADMISSION D'UN MOTEUR A COMBUSTION INTERNE

(30) Priorität: 30.06.2003 DE 10329281
(43) Veröffentlichungstag der Anmeldung: 28.06.2006
(73) Patentinhaber: Daimler AG, 70327 Stuttgart (DE)
(72) Erfinder: SUMSER, Siegfried, 70327 Stuttgart (DE)
(74) Vertreter: JENSEN & SON
(86) Internationale Anmeldenummer: PCT/EP2004/006836
(87) Internationale Veröffentlichungsnummer: WO 2005/001258

(56) Entgegenhaltungen:
- EP-A- 0 196 967
- CH-A- 407 401
- DE-A- 10 049 198
- DE-A- 10 233 042
- DE-C- 19 955 508

## Beschreibung

Die Erfindung bezieht sich auf einen Verdichter im Ansaugtrakt einer Brennkraftmaschine nach dem Oberbegriff des Anspruches 1.

In der Druckschrift DE 199 55 508 C1 wird ein Abgasturbolader für eine Brennkraftmaschine beschrieben, welcher eine Abgasturbine im Abgasstrang sowie einen Verdichter im Ansaugtrakt der Brennkraftmaschine umfasst. Die Abgasturbine wird von den unter Druck stehenden Abgasen des Motors angetrieben, wobei die Drehung des Turbinenrades über eine Welle auf das Verdichterrad übertragen wird, das aus der Umgebung angesaugte Verbrennungsluft auf erhöhten Ladedruck verdichtet, unter dem die Verbrennungsluft den Zylindern der Brennkraftmaschine zugeführt wird. Um das transiente Verhalten des Abgasturboladers zu verbessern, weist der Verdichter parallel zum Verdichtereinströmkanal einen Zusatzkanal auf, welcher in Höhe des Verdichterrades in den Verdichtereinströmkanal einmündet, wobei im Mündungsquerschnitt ein verstellbares Leitgitter angeordnet ist. Insbesondere bei niedrigen Lasten und Drehzahlen kann der Strömungsquerschnitt im Verdichtereinströmkanal reduziert bzw. abgesperrt und die zuzuführende Verbrennungsluft über den Zusatzkanal geleitet werden, welche beim Passieren des Leitgitters einen Drall erfährt, unter dem die Verbrennungsluft auf das Verdichterrad auftrifft und diesem einen antreibenden Impuls versetzt. Diese Betriebsart des Verdichters kann auch als Kaltluft-Turbinenbetrieb bezeichnet werden.

CH 40 7401 offenbart zwei Leitgitter als Austriffs-diffusor oder Vorrotationsgitter eines Verdichters.

Von diesem Stand der Technik ausgehend liegt der Erfindung das Problem zugrunde, einen Verdichter für eine Brennkraftmaschine in der Weise auszulegen, dass die Verdichterdrehzahl auch bei geringen Motordrehzahlen und Motorlasten auf einem hohen Niveau gehalten werden kann. Zweckmäßig soll mit einfachen konstruktiven Maßnahmen eine präzise Einstellung des den Verdichter passierenden Luftstromes möglich sein.

Dieses Problem wird erfindungsgemäß mit den Merkmalen des Anspruches 1 gelöst. Die Unteransprüche geben zweckmäßige Weiterbildungen an.

Der erfindungsgemäße Verdichter besitzt eine Leitgittervorrichtung im Strömungsweg zum Verdichterrad, welche zwei separate, zusammenwirkende Leitgitter mit jeweils einer Mehrzahl über den Umfang verteilter Leitschaufeln umfasst, wobei die in Achsrichtung gemessene Schaufelhöhe der Leitschaufeln der beiden Leitgitter unterschiedlich groß ist, wobei die Schaufelhöhe der Leitschaufeln des kleineren Leitgitters zwischen 5% und 35% der Schaufelhöhe der Leitschaufeln des größeren Leitgitters aufweist. Mindestens eines der Leitgitter kann in der Weise verstellt werden, dass der Strömungsquerschnitt zwischen den Leitschaufeln der beiden Leitgitter im Hinblick auf seine Fläche und/oder seine Querschnittsform veränderbar ist. Je nach Betriebssituation der Brennkraftmaschine können über die Verstellbewegung, welche auf zumindest ein Leitgitter einwirkt, die Leitschaufeln beider Leitgitter in unterschiedliche Relativpositionen zueinander gebracht werden, wodurch sich die Strömungsverhältnisse der die Leitgittervorrichtung passierenden Verbrennungsluft ändern. So kann die Leitgittervorrichtung insbesondere bei niedrigen Lasten und Drehzahlen in eine den Strömungsquerschnitt reduzierende Position verbracht werden, indem die beiden Einzelgitter in den Strömungsquerschnitt eingeschoben bzw. in eine Position verbracht werden, in welcher die Leitschaufeln beider Gitter unmittelbar benachbart zueinander liegen bzw. über den Umfang gesehen ineinander greifen. Die Verbrennungsluft kann durch die verbleibenden Strömungskanäle zwischen benachbarten Leitschaufeln hindurchströmen und hierbei einen Drall erfahren, welcher beim Auftreffen auf die Verdichterradschaufeln einen antreibenden Impuls auf das Verdichterrad bewirkt, so dass das Verdichterrad auch bei sehr niedrigen Lasten und Drehzahlen der Brennkraftmaschine auf einem erhöhten Drehzahlniveau gehalten werden kann.

Der Verdichter bildet bevorzugt einen Bestandteil eines Abgasturboladers und ist über eine Welle mit dem Turbinenrad einer Abgasturbine gekoppelt. Bei niedrigen Lasten und Drehzahlen der Brennkraftmaschine reicht die Exergie des Abgases nicht aus, um die Laderdrehzahl auf hohem Niveau zu halten. In diesen Betriebssituationen kann der Verdichter im vorbeschriebenen Kaltluft-Turbinenbetrieb gefahren werden, bei dem ein Druckgefälle zwischen Verdichtereingangs- und Verdichterausgangsseite für den Antrieb des Laders ausgenutzt werden kann und darüber hinaus über die Querschnittseinstellung mittels der beiden Leitgitter die auf das Verdichterrad auftreffende Verbrennungsluft mit einem antreibenden Drall beaufschlagt wird.

In bevorzugter Ausführung sind die beiden Leitgitter im Mündungsbereich zwischen einem Zusatzkanal und dem Verdichtereinlasskanal angeordnet. Ein derartiger Zusatzkanal kann insbesondere etwa parallel verlaufend zum Verdichtereinlasskanal vorgesehen sein und axial etwa in Höhe des Verdichterrades in den Verdichtereinlasskanal einmünden. Die über den Zusatzkanal zuzuführende Verbrennungsluft wird beim Durchströmen der Leitgitter im Mündungsbereich mit einem Drall beaufschlagt und trifft anschließend unmittelbar auf die Verdichterradschaufeln. Über den Zusatzkanal wird die Verbrennungsluft insbesondere in den Motorbetriebsbereichen mit niedriger Last und Drehzahl zugeführt; in diesem Betriebsbereich kann der Verdichtereinströmkanal mithilfe eines Sperrorgans abgesperrt werden.

Vorteilhaft erfolgt die Verstellbewegung der Leitgittervorrichtung über eine axiale Verschiebebewegung zumindest eines der beiden Leitgitter. Dies kann beispielsweise in der Weise realisiert werden, dass die Leitschaufeln der Leitgitter an gegenüberliegenden Wandabschnitten des Strömungsquerschnittes gehalten sind, wobei wenigstens einer der beiden Wandabschnitte axial verschieblich ausgeführt ist. Über eine Verschiebebewegung des betreffenden Wandabschnittes kann die Querschnittsfläche des Strömungsquerschnittes eingestellt und die daran angeordneten Leitschaufeln verstellt werden. Bei einem Annähern der beiden Leitgitter wird der Strömungsquerschnitt reduziert und wird die verbleibende Strömungsfläche von den Leitschaufeln der beiden sich annähernden Leitgitter gebildet. Insbesondere bei unterschiedlicher Schaufelhöhe bzw. -breite kann der Effekt erzielt werden, dass bei einer gegenseitigen Annäherung der beiden Leitgitter zunächst nur die axial breiteren Leitschaufeln zum Tragen kommen, welche sich über eine größere Querschnittsbreite der Mündungsöffnung erstrecken, wohingegen die axial schmaleren Leitschaufeln sich nur über einen Teilbereich des Mündungsquerschnittes erstrecken und die Strömung der Verbrennungsluft nicht oder nur unwesentlich beeinflussen. Bei weiterer Annäherung der beiden Leitgitter liegen zusätzlich zu den breiteren Leitschaufeln auch die schmaleren Leitschaufeln im nunmehr reduzierten Mündungsquerschnitt, so dass dieser von den Leitschaufeln beider Leitgitter beeinflusst wird.

Damit ein hindernisfreies Annähern der beiden Leitgitter ermöglicht wird, sind vorteilhaft an den gegenüberliegenden Wandbereichen des Mündungsquerschnittes Aufnahmetaschen für die Leitschaufeln jeweils eines Leitgitters vorgesehen.

Die Leitschaufeln der beiden Leitgitter wirken in einer Position mit reduziertem Strömungsquerschnitt zusammen. Dies wird beispielsweise dadurch erreicht, dass über den Umfang der Leitgitter gesehen die Leitschaufeln eines Leitgitters zwischen benachbarten Leitschaufeln des anderen Leitgitters liegen, so dass in Umfangsrichtung abwechselnd Leitschaufeln unterschiedlicher Leitgitter angeordnet sind. Da die Leitschaufeln unterschiedliche Größe und Form aufweisen können, werden über das Zusammenschieben der beiden Leitgitter unterschiedliche Strömungsverhältnisse eingestellt.

Zusätzlich oder alternativ zu einer Positionierung der Leitschaufeln eines Leitgitters im zwischenliegenden Abstand zwischen benachbarten Leitschaufeln des anderen Leitgitters kann es auch zweckmäßig sein, dass die Leitschaufeln eines Leitgitters auf der Stirnseite der Leitschaufeln des anderen Leitgitters positioniert werden. Hierdurch wird eine Verlängerung der Leitschaufeln erreicht, wodurch ein verstärkter Drall erzielt werden kann. Über das Zusammenwirken der Leitschaufeln beider Leitgitter kann ein Laval-Düsenkanal im freien Zwischenraum zwischen benachbarten Leitschaufeln eingestellt werden, welcher hohe Strömungsgeschwindigkeiten bzw. eine Überschallströmung der durchströmenden Verbrennungsluft ermöglicht.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer aufgeladenen Brennkraftmaschine, wobei der Verdichter des Abgas- turboladers über einen Zusatzkanal verfügt, welcher in Höhe des Verdichterrades in den Verdichterein- lasskanal einmündet und in welchem zwei separate Leitgitter angeordnet sind,
- Fig. 2: einen Schnitt durch den Verdichter mit Verdichter- rad im Verdichtereinlasskanal und parallel zum Ver- dichtereinlasskanal verlaufendem Zusatzkanal, wobei im Mündungsbereich zwischen Zusatzkanal und Ver- dichtereinlasskanal die beiden Leitgitter angeord- net sind,
- Fig. 3: einen Schnitt durch zwei zusammenwirkende Leitgit- ter, welche unterschiedlich gestaltete Leitschau- feln aufweisen,
- Fig. 4: eine Fig. 3 entsprechende Darstellung, jedoch mit einem der beiden Leitgitter in modifizierter Aus- führung,
- Fig. 5: eine Ausschnittvergrößerung von zwei zusammenwir- kenden Leitschaufeln aus Fig. 4,
- Fig. 6: ein Schaubild mit einem Motorenkennfeld, in welchem verschiedene Lastlinien in Abhängigkeit der Motor- drehzahl dargestellt sind.

In den Figuren sind gleiche Bauteile mit gleichen Bezugszeichen versehen.

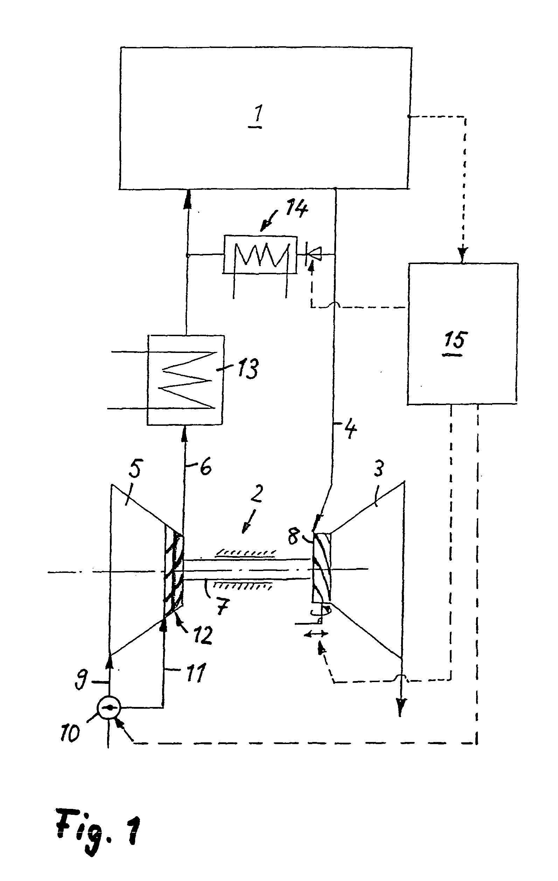

Der in Fig. 1 dargestellten Brennkraftmaschine 1 - ein Ottomotor oder ein Dieselmotor - ist ein Abgasturbolader 2 mit einer Abgasturbine 3 im Abgasstrang 4 und einem Verdichter 5 im Ansaugtrakt 6 zugeordnet. Ein Turbinenrad der Abgasturbine 3 wird von den unter Abgasgegendruck stehenden Abgasen der Brennkraftmaschine angetrieben, wobei die Turbinenradrotation über eine Welle 7 auf ein Verdichterrad im Verdichter übertragen wird, woraufhin Verbrennungsluft aus der Umgebung angesaugt und auf einen erhöhten Ladedruck verdichtet wird. Die Abgasturbine 3 ist mit einer variablen Turbinengeometrie zur veränderlichen Einstellung des wirksamen Turbineneintrittsquerschnittes versehen. Der Verdichter 5 weist in einem Verdichtereinlasskanal 9 ein einstellbares Sperrorgan 10 auf, über das die zuzuführende Verbrennungsluftmenge einstellbar ist. Vom Verdichtereinlasskanal 9 zweigt ein Zusatzkanal 11 ab, der etwa in Höhe des Verdichterrades wieder in den Verdichtereinlasskanal einmündet, wobei im Mündungsbereich eine Leitgittervorrichtung 12 mit zwei einzelnen, zusammenwirkenden Leitgittern angeordnet ist. Die über den Zusatzkanal 11 zuzuführende Verbrennungsluftmenge ist ebenfalls über das Sperrorgan 10 einzustellen.

Stromab des Verdichters 5 ist im Ansaugtrakt 6 ein Ladeluftkühler 13 angeordnet, in welchem die komprimierte Verbrennungsluft gekühlt wird, die im weiteren Verlauf unter Ladedruck den Zylindern der Brennkraftmaschine zuzuführen ist.

Des Weiteren ist eine Abgasrückführeinrichtung 14 vorgesehen, welche eine Rückführleitung zwischen dem Abgasstrang stromauf der Abgasturbine 3 und dem Ansaugtrakt stromab des Ladeluftkühlers 13 umfasst. In der Rückführleitung ist ein einstellbares Rückführventil sowie ein dem Rückführventil nachgeschalteter Abgaskühler angeordnet.

Über eine Regel- und Steuereinheit 15 können in Abhängigkeit von Zustands- und Betriebsgrößen der Brennkraftmaschine die diversen Aggregate eingestellt werden, die der Brennkraftmaschine zugeordnet sind, insbesondere die variable Turbinengeometrie 8, das Sperrorgan 10 des Verdichters 5 sowie das Rückführventil der Abgasrückführeinrichtung 14.

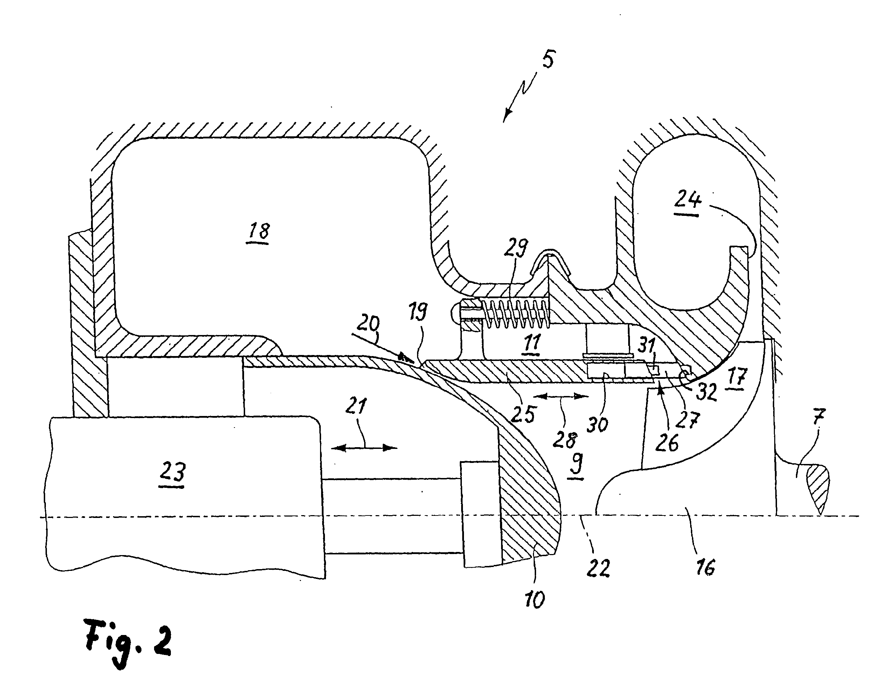

In Fig. 2 ist der Verdichter 5 im Schnitt dargestellt. Die aus einem vorgelagerten, im Verdichtergehäuse angeordneten Luftsammelraum 18 über eine Eintrittsöffnung 19, deren Querschnitt veränderbar ist und die in Fig. 2 im geschlossenen Zustand gezeigt ist, in den axialen Verdichtereinlasskanal 9 gelangende Verbrennungsluft wird von den rotierenden Verdichterradschaufeln 17 auf einen erhöhten Ladedruck verdichtet und radial in einen Diffusor 24 im Verdichtergehäuse abgeleitet, von dem aus die komprimierte Verbrennungsluft in dem in Fig. 1 dargestellten Ladeluftkühler gekühlt und anschließend unter Ladedruck in die Zylinder der Brennkraftmaschine geleitet wird. Die Rotationsachse des Verdichterrades 16 ist mit der Verdichterachse 22 identisch, die auch zugleich die Längsachse des Verdichtereinlasskanals 9 ist. Der vorgelagerte Luftsammelraum 18 ist als Ringraum ausgebildet und weist gegenüber der Verdichterachse 22 einen radialen Versatz auf. Die Eintrittsöffnung 19, welche Teil des Verdichtereinlasskanals 9 ist und über die im offenen Zustand die Verbrennungsluft aus dem Luftsammelraum 18 in Pfeilrichtung 20 in den Verdichtereinlasskanal 9 strömt, ist halbaxial ausgerichtet und schließt mit der Verdichterachse 22 einen Winkel ein.

Axial in Pfeilrichtung 21 verschieblich ist in dem Verdichtereinlasskanal 9 ein Sperrorgan 10 angeordnet, bei dessen axialer Bewegung der Querschnitt der Eintrittsöffnung 19 zwischen der in Fig. 2 dargestellten Schließstellung und einer Öffnungsstellung zu verschieben ist, in welcher die Eintrittsöffnung 19 geöffnet ist und ein Übertritt von Verbrennungsluft aus dem Luftsammelraum 18 in den Verdichtereinlasskanal 9 ermöglicht wird. Das Sperrorgan 10 wird mit Hilfe eines Stellgliedes 23 axial verschoben.

In Öffnungsstellung ist die Eintrittsöffnung 19 zwischen der Außenkontur des Sperrorgans 10 und einem Axialschieber 25 gebildet, der ebenfalls in Achsrichtung verschoben werden kann und einen axial verlaufenden, radial jedoch außerhalb des Verdichtereinlasskanals 9 verlaufenden Zusatzkanal 11 gegenüber dem Verdichtereinlasskanal abtrennt. Der Zusatzkanal 11 kommuniziert einenends ebenfalls mit dem Luftsammelraum 18 und mündet anderenends über einen Mündungsbereich 26 radial in Höhe des Verdichterrades 16 in den Verdichtereinlasskanal 9. Die über den Zusatzkanal 11 zugeführte Verbrennungsluft trifft näherungsweise radial auf die Verdichterradschaufeln 17 auf und beaufschlagt diese mit einem beschleunigenden Drall.

Zur Verbesserung der Drallwirkung ist im Mündungsbereich 16 eine Leitgittervorrichtung angeordnet, die aus zwei separaten, jedoch zusammenwirkenden Drall- bzw. Leitgittern 27 und 31 besteht. Jedes Leitgitter umfasst über den Umfang verteilte Leitschaufeln, die den Strömungsverlauf der durchströmenden Verbrennungsluft beeinflussen. Das Leitgitter 27 ist an einer den Mündungsbereich 26 begrenzenden Wandung des Verdichtergehäuses fest und unbeweglich gehalten. Das zweite Leitgitter 31 ist an der die gegenüberliegende Wandung des Mündungsbereiches 26 bildende Stirnseite des Axialschiebers 25 gehalten.

Axialschieber 25 und die beiden Leitgitter 27 und 31 bilden gemeinsam eine Dralleinrichtung, über die der Mündungsquerschnitt des Mündungsbereiches 26 zwischen der in Fig. 2 dargestellten Öffnungsposition und einer Stauposition zu verstellen ist, in welcher der Mündungsquerschnitt auf ein Minimum reduziert ist, gegebenenfalls auch vollständig abgesperrt ist. Die Einstellung des Mündungsquerschnittes erfolgt durch eine axiale Verschiebung des Axialschiebers 25 in Pfeilrichtung 28. Die Stauposition des Mündungsbereiches 26 wird erreicht, wenn die den Mündungsbereich begrenzende Stirnseite des Axialschiebers 25 weitestmöglich der gegenüberliegenden Wandung des Mündungsbereiches angenähert ist, die Teil des Verdichtergehäuses ist.

Der Axialschieber 25 ist am Verdichtergehäuse verschieblich gelagert und wird von einem Federelement 29 in seine Öffnungsstellung beaufschlagt. Zur Überführung aus der Öffnungsstellung in die Staustellung wird der Axialschieber 25 gegen die Federkraft des Federelementes 29 verschoben. Hierbei werden die Leitschaufeln des am Verdichtergehäuse gehaltenen Leitgitters 27 in gegenüberliegende axiale, stirnseitige Aufnahmetaschen 30 im Axialschieber 25 eingeschoben. Umgekehrt können die Leitschaufeln des am Axialschieber 25 gehaltenen Leitgitters 31 in Aufnahmetaschen 32 eingeschoben werden, die in die gegenüberliegende Wandung des Verdichtergehäuses eingebracht sind.

Die Leitgitter 27 und 31 sind unterschiedlich ausgeführt und weisen insbesondere unterschiedliche Leitschaufeln auf. Zweckmäßig ist die in Achsrichtung des Verdichters bzw. die entlang der axialen Erstreckung des Mündungsbereichs gemessene Schaufelhöhe beider Leitgitter unterschiedlich groß ausgeführt. So beträgt die Schaufelhöhe des kleineren Leitgitters 31 zwischen 5% und 35% der Schaufelhöhe des größeren Leitgitters 27. Dem größeren Leitgitter 27 kommt die Funktion eines Hauptgitters zu, dem kleinere Leitgitter 31 die Funktion eines Zusatzgitters.

In Fig. 2 ist das Sperrorgan 10 axial in seine Schließstellung verstellt, in welcher die Eintrittsöffnung 19 des Verdichtereinlasskanals 9 abgesperrt ist. Das Sperrorgan 10 ist als Sperrstempel ausgebildet, wobei in der Sperrstellung die Außenkontur des Sperrorgans die Außenkontur des Axialschiebers 25 berührt, so dass die Eintrittsöffnung 19 geschlossen ist. Der Axialschieber 25 befindet sich in der in Fig. 2 dargestellten Lage noch in seiner Öffnungsstellung, in welcher der Mündungsbereich 26 geöffnet ist. In dieser Konfiguration nimmt der Verdichter 5 die Funktion einer Kaltluftturbine ein, da der über den Zusatzkanal 11 zuzuführende Verbrennungsluftstrom aufgrund eines Druckgefälles zwischen Verdichtereingang und Verdichterausgang das Verdichterrad 16 antreibt und stromab des Verdichterrades auf einen Unterdruck entspannt wird.

In dieser Position überspannen die Leitschaufeln des Hauptgitters 27 den Mündungsbereich 26 zwischen Zusatzkanal 11 und Verdichtereinlasskanal 9, wodurch die durchströmende Verbrennungsluft mit einem Drall beaufschlagt wird und beim Auftreffen auf die Verdichterradschaufeln 17 dem Verdichterrad 16 ein beschleunigender Impuls versetzt wird. Die Leitschaufeln des Zusatzgitters 31 ragen dagegen aufgrund ihrer schmaleren Ausführung nur geringfügig in den Mündungsbereich 26 ein, so dass der Strömungsquerschnitt vom Zusatzgitter 31 weitgehend unbeeinflusst bleibt.

Bei einer weiteren axialen Verschiebung des Sperrorgans 10 in Richtung des Verdichterrades 16 wird auch der Axialschieber 25 weiter in diese Richtung verschoben, so dass die Querschnittsfläche des Mündungsbereichs 26 reduziert und gegebenenfalls vollständig abgeriegelt wird. Hierbei werden die Leitschaufeln des Hauptgitters 27 in die Aufnahmetaschen 30 in der Stirnseite des Axialschiebers 25 eingeschoben. Zugleich nähern sich die Leitschaufeln des Zusatzgitters 31 der gegenüberliegenden Wandung am Verdichtergehäuse an. Sobald die Wandung erreicht wird, besitzt der Mündungsbereich 26 einen kleinsten offenen Strömungsquerschnitt, bei dem die Leitschaufeln beider Leitgitter 27 und 31 den Strömungsquerschnitt im Mündungsbereich bestimmen. Auch in dieser Position nimmt der Verdichter einen Kaltluft-Turbinenbetrieb ein, wobei der kleinste Strömungsquerschnitt für niedrigste Lasten und Drehzahlen der Brennkraftmaschine bestimmt ist.

Werden Sperrorgan 10 und Axialschieber 25 noch weiter in Richtung auf das Verdichterrad 16 verschoben, werden die Leitschaufeln des Zusatzgitters 31 in ihre Aufnahmetaschen 32 im Bereich der Wandung des Verdichtergehäuses eingeschoben, so dass der Strömungsquerschnitt des Mündungsbereiches 26 vollständig verschlossen ist.

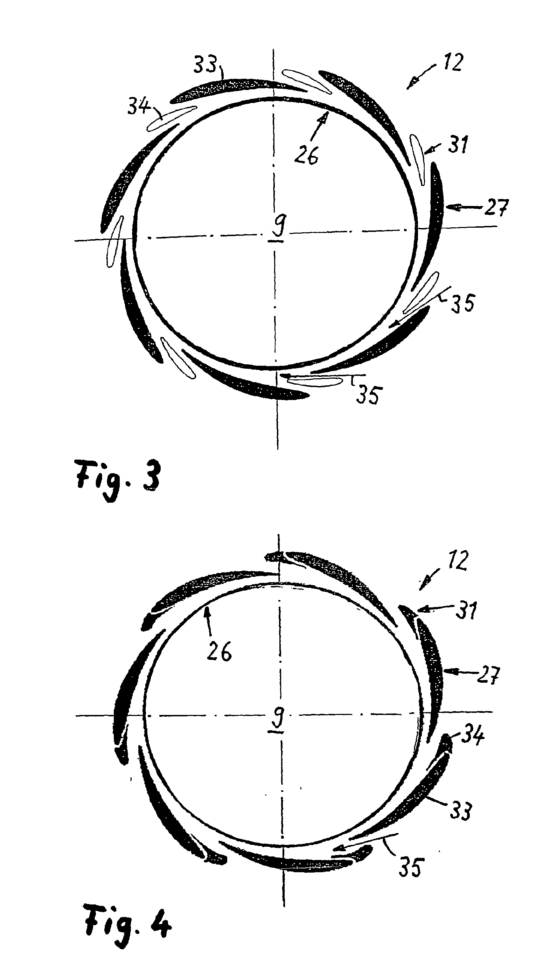

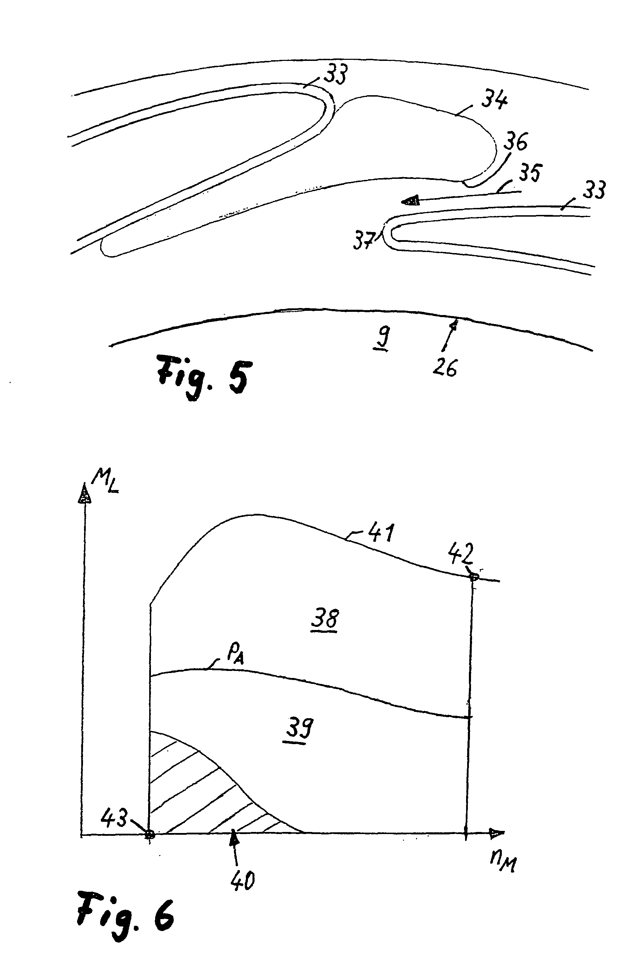

In Fig. 3 ist eine Leitgittervorrichtung 12 mit ineinander geschobenen Leitgittern 27 und 31 dargestellt. Das Hauptgitter 27 weist größere, über den Umfang verteilte Leitschaufeln 33 auf, das Zusatzgitter 31 kleinere, über den Umfang verteilte Leitschaufeln 34, wobei in zusammengeschobener Position der Leitgittervorrichtung die kleineren Leitschaufeln 34 in die Zwischenräume zwischen benachbarten größeren Leitschaufeln 33 einragen. Hierdurch wird der freie Strömungsquerschnitt des Mündungsbereiches 26 reduziert und auch die Form des Strömungsquerschnittes beeinflusst. Die über den Zusatzkanal herangeführte Verbrennungsluft durchströmt in Pfeilrichtung 35 die Zwischenräume zwischen benachbarten Leitschaufeln 33 und 34. Die kleineren Leitschaufeln 34 liegen auf Abstand zu größeren Leitschaufeln 33 im Bereich beider Schaufelenden, so dass sowohl an der Außenseite als auch an der Innenseite der kleineren Leitschaufeln 34 freie Strömungskanäle gegeben sind, durch die Verbrennungsluft hindurchströmen kann. Die in Fig. 3 gezeigte Darstellung entspricht ebenso wie diejenige nach Fig. 4 und Fig. 5 der axial ineinander geschobenen Position der beiden Leitgitter, welche die Niederlastposition bei niedrigsten Lasten und Drehzahlen der Brennkraftmaschine kennzeichnet.

In den Fig. 4 und 5 bilden die beiden Leitgitter 27 und 31 mit ihren Leitschaufeln 33 und 34 ein Überschallgitter, bei dem die kleineren Leitschaufeln 34 auf der vorderen Stirnseite der größeren Leitschaufeln 33 liegen. Es wird ein Laval-Düsenkanal zwischen jeweils einer kleineren Leitschaufel 34 und einer benachbarten, größeren Leitschaufel 33 gebildet, in welchem sich eine stabile Überschallströmung ausbilden kann. Der engste Strömungsquerschnitt liegt im Bereich einer außenliegenden Nase 36 der kleineren Schaufel 34, wobei die Nase 36 in Umfangsrichtung mit Abstand zur Hinterkante 37 der größeren, benachbarten Leitschaufel 33 angeordnet ist. Die einander zugewandten Wandungen der Schaufeln 33 und 34 bilden einen diffusorförmigen Laval-Düsenkanal, wodurch die Überschallströmung unterstützt wird.

Fig. 6 zeigt ein Schaubild mit dem Lastverlauf M_{L} der Brennkraftmaschine in Abhängigkeit von der Motordrehzahl n_{M}. Eingetragen sind ein oberer Aufladebereich 38, welcher durch einen Überdruck im Ansaugtrakt gekennzeichnet ist, sowie ein Saugmotoren-Betriebsbereich 39, in welchem im Ansaugtrakt unmittelbar vor den Zylindereinlässen ein Unterdruck herrscht. Die beiden Bereiche sind durch eine den Umgebungsdruck p_{A} kennzeichnende Linie separiert. Innerhalb des Saugmotoren-Betriebsbereiches 39, in welchem der Verdichter im Kaltluft-Turbinenbetrieb gefahren wird, liegt im Bereich kleinster Lasten und Drehzahlen der schraffierte Niederlastbereich 40, bei dem beide Leitgitter den Strömungsquerschnitt im Mündungsbereich von Zusatzkanal zu Verdichtereinlasskanal bestimmen. In den übrigen Bereichen des Saugmotoren-Betriebsbereiches 39 wird dagegen der Strömungsquerschnitt des Mündungsbereiches nur bzw. hauptsächlich von dem größeren Hauptgitter beeinflusst.

Der gesamte Betriebsbereich erstreckt sich zwischen einem Leerlaufpunkt 43, welcher die Leerlaufdrehzahl im lastfreien Zustand kennzeichnet, und einem Nennleistungspunkt 42 auf einer Volllastlinie 41, wobei der Nennleistungspunkt 42 die Nennleistung der Brennkraftmaschine bei Nenndrehzahl kennzeichnet. Die Volllastlinie 41 beschränkt den Aufladebereich 38 nach oben in Richtung höchster Lasten.

## Patentansprüche

1. Verdichter im Ansaugtrakt einer Brennkraftmaschine, mit einem in einem Verdichtereinlasskanal (9) drehbar gelagerten Verdichterrad (16), über das zugeführte Verbrennungsluft auf einen erhöhten Ladedruck komprimierbar ist, und mit einer verstellbaren Leitgittervorrichtung (12) im Strömungsweg zum Verdichterrad (16),
wobei die Rotationsachse des Verdichterrads (16) mit der Verdichterachse identisch ist, die auch zugleich die Längsachse des Verdichtereinlassizanals (9) ist,
**dadurch gekennzeichnet,**
**dass** die Leitgittervorrichtung (12) zwei separate, zusammenwirkende Leitgitter (27, 31) mit jeweils einer Mehrzahl über den Umfang verteilter Leitschaufeln (33, 34) umfasst, wobei über eine auf mindestens ein Leitgitter (27, 31) wirkende Verstellbewegung der Strömungsquerschnitt zwischen den Leitschaufeln (33, 34) der beiden Leitgitter (27, 31) veränderbar ist, und dass die in Achsrichtung gemessene Schaufelhöhe der Leitschaufeln (33, 34) der beiden Leitgitter (27, 31) unterschiedlich groß ist, wobei die Schaufelhöhe der Leitschaufeln (34) des kleineren Leitgitters (31) zwischen 5% und 35% der Schaufelhöhe der Leitschaufeln (33) des größeren Leitgitters (27) beträgt.

2. Verdichter nach Anspruch 1,
**dadurch gekennzeichnet,**
**dass** ein in den Verdichtereinlasskanal (9) einmündender Zusatzkanal (11) vorgesehen ist und dass die beiden Leitgitter (27, 31) im Mündungsbereich (26) des Zusatzkanals (11) in den Verdichtereinlasskanal (9) angeordnet sind.

3. Verdichter nach Anspruch 2,
**dadurch gekennzeichnet,**
**dass** der Zusatzkanal (11) axial in Höhe des Verdichterrades (16) in den Verdichtereinlasskanal (9) einmündet.

4. Verdichter nach einem der Ansprüche 1 bis 3,
**dadurch gekennzeichnet,**
**dass** mindestens ein Leitgitter (31) axial verschieblich ist.

5. Verdichter nach einem der Ansprüche 1 bis 4,
**dadurch gekennzeichnet,**
**dass** ein Leitgitter (27) am Verdichtergehäuse und das andere Leitgitter (31) an einem beweglichen Stellglied (25) gehalten ist.

6. Verdichter nach Anspruch 4 und 5,
**dadurch gekennzeichnet,**
**dass** die Leitschaufeln (33, 34) der beiden Leitgitter (27, 31) in Aufnahmetaschen (30, 32) an gegenüberliegenden Wandabschnitten der den Strömungsquerschnitt begrenzenden Wandung einfahrbar sind.

7. Verdichter nach einem der Ansprüche 1 bis 6,
**dadurch gekennzeichnet,**
**dass** die Leitschaufeln (33, 34) mindestens eines Leitgitters (27, 31) unbeweglich an einem Leitgitterring befestigt sind.

8. Verdichter nach einem der Ansprüche 1 bis 7,
**dadurch gekennzeichnet,**
**dass** in einer Position mit reduziertem Strömungsquerschnitt die Leitschaufeln (34) eines Leitgitters (31) zwischen den Leitschaufeln (33) des anderen Leitgitters (27) liegen.

9. Verdichter nach einem der Ansprüche 1 bis 8,
**dadurch gekennzeichnet,**
**dass** in einer Position mit reduziertem Strömungsquerschnitt die Leitschaufeln (34) eines Leitgitters (31) auf der Stirnseite der Leitschaufeln (33) des anderen Leitgitters (27) liegen.

10. Verdichter nach einem der Ansprüche 1 bis 9,
**dadurch gekennzeichnet,**
**dass** im Verdichtereinlasskanal (9) stromauf des Verdichterrades (16) ein einstellbares Sperrorgan (10) zur Einstellung des Strömungsquerschnitts des Verdichtereinlasskanals (9) angeordnet ist, wobei das Sperrorgan (9) ein Leitgitter (27, 31) in der Weise beaufschlagt, dass eine Stellbewegung des Sperrorgans (10) eine Verstellung des Leitgitters (27, 31) erzeugt.

11. Abgasturbolader mit einem Verdichter nach einem der Ansprüche 1 bis 10 und einer Abgasturbine im Abgasstrang der Brennkraftmaschine.

12. Abgasturbolader nach Anspruch 11,
**dadurch gekennzeichnet,**
**dass** die Abgasturbine (3) mit einer variablen Turbinengeometrie (8) zur veränderlichen Einstellung des wirksamen Turbineneintrittsquerschnitts ausgestattet ist.

## Claims

1. Compressor in the induction tract of an internal combustion engine, comprising a compressor impeller (16) rotatably mounted in a compressor inlet passage (9), whereby the fed-in combustion air can be compressed to an increased boost pressure, and an adjustable guide grid device (12) in the flow path to the compressor impelled (16), the axis of rotation of the compressor impeller (16) being identical to the compressor axis, which also forms the longitudinal axis of the compressor inlet passage (9),
**characterised in that**
the guide grid device (12) comprises two separate guide grids (27, 31) acting together, each halving a plurality of guide vanes (33, 34) distributed along its circumference, wherein the flow cross-section between the guide vanes (33, 34) of the two guide grids (27, 31) can be altered by means of an adjusting movement acting on at least one guide grid (27, 31), and **in that** the height of the guide vanes (33, 34) of the two guide grids (27, 31) as measured in the axial direction is different, the height of the guide vanes (34) of the smaller guide grid (31) amounting to between 5% and 35% of the height of the guide vanes (33) of the larger guide grid (27).

2. Compressor according to claim 1,
**characterised in that**
an auxiliary passage (11) terminating intro the compressor intent passage (9) is provided, and **in that** the two guide grids (27, 31) are provided in the termination region (26) of the auxiliary passage (11) into the compressor inlet passage (9).

3. Compressor according to claim 2,
**characterised in that**
the auxiliary passage (11) terminates axially into the compressor inlet passage (9) at the level of the compressor impeller (16).

4. Compressor according to any of claims 1 to 3,
**characterised in that**
at least one guide grid (31) is axially displaceable.

5. Compressor according to any of claims 1 to 4,
**characterised in that**
one guide grid (27) is held on the compressor housing and the other guide grid (31) is held on a movable control element (25).

6. Compressor according to claims 4 and 5,
**characterised in that**
the guide vales (33, 34) of the two guide grids (27, 31) can be retracted into location pockets (30, 32) in opposite wall sections of the wall bounding the flow cross-section.

7. Compressor according to any of claims 1 to 6,
**characterised in that**
the guide vanes (33, 34) of at least one of the guide grids (27. 31) are immovably fitted to a guide grid ruing.

8. Compressor according to any of claims 1 to 7,
**characterised in that**
in a position with a reduced flow cross-section, the guide vanes (34) of one guide grid (31) lie between the guide vanes (33) of the other guide grid (27).

9. Compressor according to any of claims 1 to 8,
**characterised in that**
in a position with a reduced flow cross-section, the guide vanes (34) of one guide grid (31) lie on the end face of the guide vanes (33) of the other guide grid (27).

10. Compressor according to any of claims 1 to 9,
**characterised in that**
an adjustable shut-off element (10) for adjusting the flow cross-section of the compressor inlet passage (9) is provided in the compressor inlet passage (9) upstream of the compressor impeller (16), the shut-off element (9) acting on a guide grid (27, 31) in such a way that a control movement of the shut-off element (10) causes an adjustment of the guide grid (27, 31).

11. Turbocharger comprising a compressor according to any of claims 1 to 10 and an exhaust gas turbine in the exhaust train of the internal combustion engine.

12. Turbocharger according to claim 1,
**characterised in that**
the exhaust gas turbine (3) has a variable turbine geometry (8) for the variable adjustment of the effective turbine inlet cross-section.

## Revendications

1. Compresseur (5), monté dans le système d'admission d'un moteur à combustion interne et doté d'une roue de compresseur (16) montée pivotante dans un canal d'admission (9) du compresseur, cette roue comprimant à une pression d'admission supérieure l'air de combustion entrant, et d'un dispositif à grille de guidage (12) mobile, disposé dans le trajet d'écoulement vers la roue du compresseur (16), l'axe de rotation de la roue du compresseur (16) est identique à l'axe du compresseur qui est également à la fois l'axe longitudinal du canal d'admission (9) du compresseur, **caractérisé en ce que** le dispositif à grille de guidage (12) comporte deux grilles de guidage (27, 31) séparées qui coopèrent, pourvues chacune d'une pluralité d'aubes directrices (33, 34) réparties sur le pourtour, le déplacement d'au moins une grille de guidage (27, 31) modifie la section transversale de l'écoulement entre les aubes directrices (33, 34) des deux grilles de guidage (27, 31), et **en ce que** les aubes directrices (33, 34) des deux grilles de guidage (27, 31) mesurées dans le sens axial sont de taille différente, la hauteur des aubes directrices (34) de la petite grille de guidage (31) est comprise entre 5 % et 35 % de la hauteur de l'aube directrice (33) de la grande grille de guidage (27).

2. Compresseur selon la revendication 1, **caractérisé en ce qu'**il est prévu un canal supplémentaire (11) qui débouche dans le canal d'admission du compresseur (9) et **en ce que** les deux grilles de guidage (27, 31) sont disposées dans la zone de sortie (26) du canal supplémentaire (11) dans le canal d'admission (9) du compresseur.

3. Compresseur selon la revendication 2, **caractérisé en ce que** le canal supplémentaire (11) débouche de façon axiale à la hauteur de la roue (16) du compresseur dans le canal d'admission (9) du compresseur.

4. Compresseur selon l'une quelconque des revendications 1 à 3, **caractérisé en ce qu'**au moins une grille de guidage (31) peut être déplacée de façon axiale.

5. Compresseur selon l'une quelconque des revendication 1 à 4, **caractérisé en ce qu'**une grille de guidage (27) est fixée sur le carter du compresseur et que l'autre grille de guidage (31) est fixée sur l'organe de réglage (25) mobile.

6. Compresseur selon la revendication 4 ou 5, **caractérisé en ce que** les aubes directrices (33, 34) des deux grilles de guidage (27, 31) sont introduites dans des poches réceptrices (30, 32) disposées sur les segments de paroi opposés de la paroi limitant la section transversale d'écoulement.

7. Compresseur selon l'une quelconque des revendications 1 à 6, **caractérisé en ce que** les aubes directrices (33, 34) d'au moins une grille de guidage (27, 31) sont fixées de manière non amovible sur un anneau de grille de guidage.

8. Compresseur selon l'une quelconque des revendications 1 à 7, **caractérise en ce que** les aubes directrices (34) d'une grille de guidage (31) sont dans une position avec une section transversale d'écoulement réduite entre les aubes directrices (33) de l'autre grille de guidage (27).

9. Compresseur selon l'une quelconque des revendications 1 à 8, **caractérisé en ce que** les aubes directrices (34) d'une grille de guidage (31) sont dans une position avec une section transversale d'écoulement réduite sur la face avant des aubes directrices (33) de l'autre grille de guidage (27).

10. Compresseur selon l'une quelconque des revendications 1 à 9, **caractérise en ce qu'**un organe d'arrêt (10) réglable permettant de régler la section transversale d'écoulement du canal d'admission (9) du compresseur est disposé dans le canal d'admission (9) du compresseur en amont de la roue de compresseur (16), l'organe d'arrêt (9) alimente une grille de guidage (27, 31) de telle sorte qu'un mouvement de réglage de l'organe de blocage (10) génère un déplacement de la grille de guidage (27, 31).

11. Turbocompresseur à gaz d'échappement doté d'un compresseur selon l'une quelconque des revendications 1 à 10 et d'une turbine à gaz d'échappement dans un circuit de gaz d'échappement du moteur à combustion interne.

12. Turbocompresseur selon la revendication 11, **caractérisé en ce que** la turbine à gaz d'échappement (3) est équipée d'une turbine à géométrie (8) variable pour régler de manière modulée et efficace la rection transversale d'entrée de turbine.
